Europäisches Patentamt

European Patent Office

Office européen des brevets

(11) Publication number: **0 176 508**
**B1**

## EUROPEAN PATENT SPECIFICATION

(45) Date of publication of patent specification: **04.10.89**

(21) Application number: **84902039.1**

(22) Date of filing: **21.05.84**

(86) International application number:
**PCT/GB84/00173**

(87) International publication number:
**WO 84/04725 06.12.84 Gazette 84/28**

(51) Int. Cl.⁴: **B 29 C 71/02, B 01 J 3/04, F 23 C 3/00**

(54) **IMPROVEMENTS IN OR RELATING TO AUTOCLAVES.**

(30) Priority: **24.05.83 GB 8314390**

(43) Date of publication of application:
**09.04.86 Bulletin 86/15**

(45) Publication of the grant of the patent:
**04.10.89 Bulletin 89/40**

(84) Designated Contracting States:
**DE FR GB NL**

(56) References cited:
**BE-A- 351 138**
**FR-A- 452 015**
**FR-A- 461 925**
**GB-A- 477 607**
**GB-A- 754 859**
**GB-A- 810 122**
**GB-A-1 085 067**
**US-A-3 187 799**

(73) Proprietor: **FARLEYDENE LIMITED**
**Dawkins Road Industrial Estate**
**Poole Dorset BH15 4JW (GB)**

(72) Inventor: **TOLL, Ian, Cecil**
**12 Brunstead Road Branksome, Poole**
**Dorset (GB)**

(74) Representative: **Cooke, William Douglas et al**
**Hughes Clark & Co. 63 Lincoln's Inn Fields**
**London WC2A 3JU (GB)**

Courier Press, Leamington Spa, England.

## Description

### Field of the invention

The present invention relates to an autoclave particularly, but not exclusively intended for the curing of fibre reinforced plastics materials.

### Background of the invention

In the production of articles made from carbon fibre/resin mixtures having high fibre contents and requiring cure at temperatures of up to 400°C it is essential to have an autoclave whose temperature can be controlled vary accurately. The temperatures involved are higher than can conveniently be reached with steam heated autoclaves and the use of live steam at high pressure requires elaborate and expensive safety equipment. Electrically heated autoclaves are more commonly employed for curing articles of this kind, but are expensive to install and operate and suffer from the additional problem that if a heating element fails while the autoclave is in the middle of a cure cycle the element cannot be replaced and the whole batch of material being treated may be lost. In the case of high value materials such as carbon fibre this is a serious problem.

Rubber vulcanising tanks are known from Patent Specification Nos GB—A—477607, GB—A—754859 and FR—A—452015 in which steam passes through closed loop pipes to heat the air within the furnace which is circulated by a fan, but steam provides inadequate temperatures. US—A—3187799 discloses a gas burner heating a gas-filled radiant tube but not in the context of a fan assisted autoclave and not with an impeller to draw gas through the radiant tube.

### Summary of the invention

Accordingly it is an object of the invention to provide an autoclave suitable for the treatment of fibre reinforced plastics materials requiring to be cured at high temperatures with accurate temperature control.

Broadly stated the invention provides an autoclave for the heat treatment of fibre reinforced plastics materials which does not suffer from the limitations of that described in GB—A—754859 comprises a gas-tight tank having at least one closed flow loop defined by a heat-exchange pipe that is exposed to the interior of the tank and has an inlet and an outlet accessible from outside the tank and a fan inside the tank for circulating gas within the furnace to exchange heat with the heat-exchange pipe characterised in that:

(a) the or each closed flow loop has a gas burner connected to the inlet and an air impeller connected to the outlet and operable to suck burnt gas through the loop;

(b) the flow loop or loops are operable to heat the autoclave to a working temperature of up to 400°C;

(c) temperature sensing means extending through the wall of the tank responds to the temperature of the gas therein; and

(d) a control unit responsive to the state of the temperature sensing means is operably connected to the or each gas burner to turn the or each burner on or off so as to maintain the temperature of the gas in the autoclave within ±1°C of the intended value.

The capacity of the gas-heated flow loops to give the required accuracy of temperature control and the required working temperature enables fibre-reinforced plastics materials to be cured in an autoclave according to the invention is a successful and reproducible manner. The autoclave is of simple and inexpensive construction and does not require elaborate safety precautions because the heating unit can be a well established natural gas or propane burner and the flue gas leaves the impeller at a comparatively low temperature and not under pressure. Moreover the or each gas burner is mounted outside the autoclave where in the event of failure it can be removed and replaced in a matter of minutes to that loss of a charge of components is no longer an inevitable consequence of burner failure.

The tank may be generally circular, is mounted with its axis horizontally and is closed at its mouth with an access door or port, the or each heat exchange pipe taking a sinuous path and entering and leaving the tank through the end wall thereof. Preferably there are at least two heat exchange loops mounted to opposed sides of the tank, each heat exchange loop making two passes along the tank and back and arranged so that a horizontal diameter between the two passes of the opposed loops is unobstructed for a substantial distance from the tank mouth whereby articles having substantially the full diameter of the tank may be inserted. An additional heat exchange loop may be provided in the floor. Preferably each heat exchange pipe enters and leaves the tank through a flanged sleeve and has flanges that are fastened to the flanges of the inlet and outlet end sleeves whereby said heat exchange pipes are removably retained in the autoclave.

### Brief description of drawings

An embodiment of the invention will now be described by way of example only with reference to the accompanying drawings, in which:

Figure 1 is a longitudinal vertical section of a gas fired autoclave having three heating circuits;

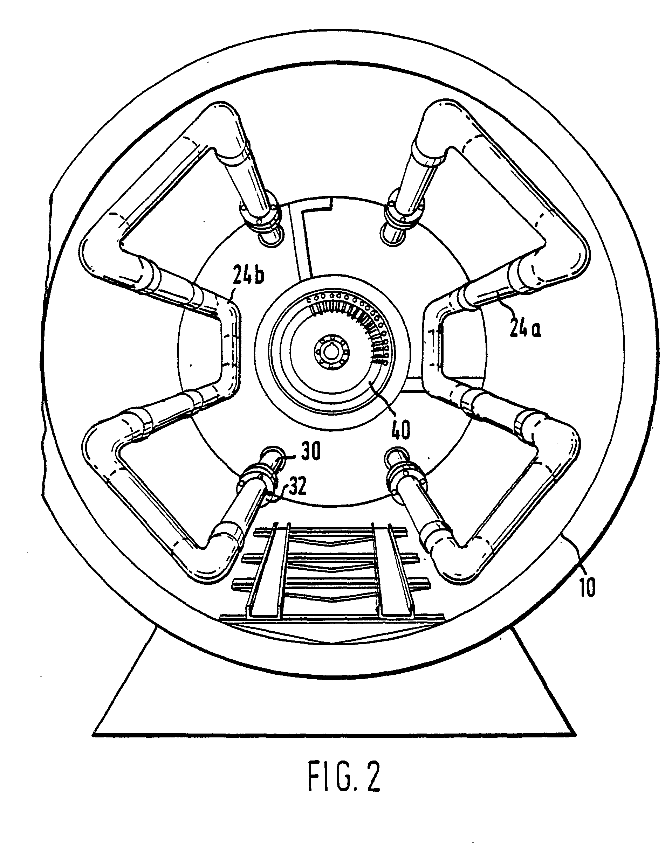

Figure 2 is a view of the interior of an autoclave similar to Figure 1 but having only two heating circuits.

### Detailed description of preferred embodiments

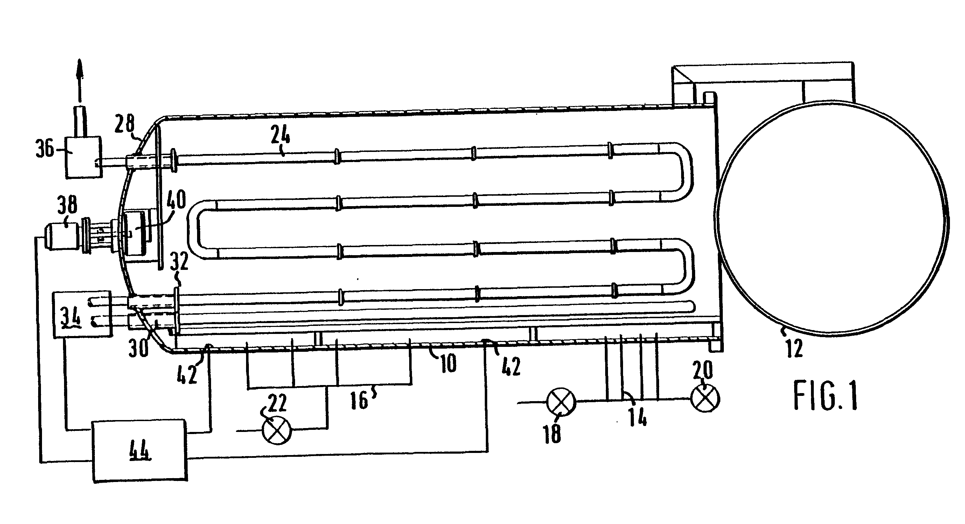

In Figure 1 an autoclave tank structure 10 that may typically be about 12 feet (3.658 metres) in length and diameter about 5 feet (1.524 metres) has a loading door 12. Vacuum lines 14 are provided for connection to the mould side of a mould former (not shown) having a flexible diaphragm thereover and connectable through valve 18 to vacuum and through valve 20 to air for purposes that will be described hereinafter. Pressure lines 16 are also provided with a control valve 22 cross-linked to the door 12 so that the interior of the autoclave cannot be pressurized with the door open.

The interior of the autoclave tank is provided with exposed heater tubes 24 running the length of the tank in serpentine manner as shown and divided into side sets 24a, 24b and an optional bottom set (not shown), each set defining a closed gas flow loop that enters and leaves through the end wall 28. The tubes 24 are of bore typically 2—2.5 inches (5.080—6.350 cm) and are fabricated of mild steel, or stainless steel or any other material resistant to high temperatures, eg. up to 600°C. The tubes 24 may be coated on their exterior surfaces with sprayed on aluminium metal or other coating material that promotes increased efficiency of surface radiation.

The tubes 24 are removably mounted in the autoclave tank by means of flanged sleeves 30 and welded-on flanges 32. The entry side of each tube 24 is provided with a gas fired heater 34 including a gas burner, a regulator valve to sense gas flow and maintain combustion, and an ignition system. The flue outlet from the burner is directly connected by a sleeve to the inlet to the respective tube 24 in such a manner that the heater 34 can be replaced rapidly in the event of boiler failure. The discharge end of the tube 24 is provided with an impeller 36 by which a negative pressure is produced towards said discharge end of the tube 24 to maintain a flow of flue gas therethrough. Spent flue gas from the impeller may be vented through an ordinary flue. The number of independent heater circuits constituted by heater 34, flow tube 24 and impeller 36 may be varied depending upon the capacity of the intended heater 34, the size of the autoclave tank and operational convenience but normally there will be at least two independent circuits. The provision of two loops aids heat distribution, and in the embodiment shown the tube loops 24b, 24c are configured so that a plate can be inserted horizontally to the maximum diameter of the tank 12. The burner power should, of course, be correlated with the bore of the tubes 24 and the length to the first elbow therein so that an unacceptable heat build up at the first elbow does not take place. Where the length of the autocalve is sufficient, usually more than 30—40 feet (9.144—12.801 metres) the tubes 24 may be straight and may simply exit via an elbow through the tank wall 10. A motor 38 mounted on the tank end wall is operatively connected to a radial flow impeller 40 within the tank 10 to produce circulatory gas flow with the autoclave tank.

The tank 10 may be insulated with mineral wool and covered with a metal sheath. Thermocouples 42 through the tank wall 10 responsive to the gas temperature are connected to a control unit 44 which is operatively connected to the several heaters 34 to turn them on or off to maintain a preset temperature in the autoclave. The control unit 44 may also be operatively connected to motor 38 so that the said motor 38 and fan 40 always run when the heaters 34 are operational. A time delay relay in the ignition system of heater 34 responds to signals from the control unit 44 so that the heater 34 is switched on only after the control thermocouple has indicated a temperature below the rated temperature for a predetermined time period, thereby preventing short duration ON-OFF cycles of the heater 34.

For the hot moulding of fibre reinforced plastics components, a mould form with laid up resin, bleeder cloth and pressure plate is enclosed in a vacuum bag introduced into the autoclave and the vacuum bag connected to lines 14. Vacuum is applied and heat is applied to the furnace to typically about 250°F (121.11°C) at a preset heat up rate of 1—5°F (−17.22°—−15.00°C) per minute. A first dwell period of 30—60 minutes is required for resin gelation and when the resin flow characteristics are correct pressure of from 6—7 bar is applied from the interior of the vessel using the line 16 so as to form the moulding and at an appropriate time after the pressure has stabilised the vacuum is switched off and the temperature in the furnace is raised through a second heat-up ramp to the cure temperature, typically 350°C which is maintained for an appropriate time. After cure is complete the autoclave is cooled either naturally or by air cooling, cool air being blown by another impeller through the tubes 24 or simply by running fan 36 with heater 34 off to draw cool air into the tubes 24.

It will be appreciated that various modifications may be made to the described embodiment without departing from the invention, the scope of which is defined in the appended claims.

**Claims**

1. An autoclave for the heat treatment of fibre reinforced plastics materials comprising a gas-tight tank (10) having at least one closed flow loop defined by a heat-exchange pipe (24) that is exposed to the interior of the tank (10) and has an inlet and an outlet accessible from outside the tank (10) and a fan (40) inside the tank (10) for circulating gas within the furnace to exchange heat with the heat-exchange pipe (24) characterised in that:

(a) the or each closed flow loop has a gas burner (34) connected to the inlet and an air impeller (36) connected to the outlet and operable to suck burnt gas through the loop;

(b) the flow loop or loops are operable to heat the autoclave to a working temperature of up to 400°C;

(c) temperature sensing means (42) extending through the wall of the tank (10) responds to the temperature of the gas therein; and

(d) a control unit (44) responsive to the state of the temperature sensing means (42) is operably connected to the or each gas burner (34) to turn the or each burner on or off so as to maintain the temperature of the gas autoclave within ±1°C of the intended value.

2. An autoclave according to claim 1, wherein the tank (10) is generally cylindrical, is mounted with its axis horizontally and is closed at its mouth with an access door or port (12), the heat exchange pipe (24) taking a sinuous path and entering and leaving the tank (10) through the end wall (28) thereof.

3. An autoclave according to claim 2, wherein there are at least two heat exchange loops (24a, 24b) mounted to opposed sides of the tank (10), each heat exchange loop making two passes along the tank (10) and back and arranged so that a horizontal diameter between the two passes of the opposed loops is unobstructed for a substantial distance from the tank mouth whereby articles having substantially the full diameter of the tank (10) may be inserted.

4. An autoclave according to claim 3, wherein an additional heat exchange loop is provided in the floor.

5. An autoclave according to any preceding claim, wherein the heat exchange pipe enters and leaves the tank through a flanged sleeve (30) and has flanges (32) that are fastened to the flanges of the inlet and outlet end sleeves (30) whereby said heat exchange pipes (24) are removably retained in the autoclave.

6. An autoclave according to any preceding claim, wherein the tank is provided with means (16) for admitting gas thereto under pressure and means (14) for evacuating gas therefrom.

7. An autoclave according to any preceding claim, wherein time delay means is provided operative to prevent the or each gas burner (24) from being switched on until the state of the temperature sensing means (42) has indicated a temperature below the rated temperature for a predetermined time.

## Patentansprüche

1. Autoklav zur Wärmebehandlung von faserverstärkten Kunststoffmaterialien mit einem gasdichten Tank (10) mit wenigstens einer geschlossenen Strömungsschleife, die von einem Wärmeaustauscherrohr (24) gebildet ist, welches dem Innenraum des Tanks (10) ausgesetzt ist und einen Eintritt und einen Austritt, welche jeweils von der Außenseite des Tanks (10) zugänglich sind, und ein Gebläse (40) innerhalb des Tanks (10) zum Zirkulieren des Gases innerhalb des Ofens aufweist, um Wärme mit dem Wärmeaustauscherrohr (24) auszutauschen, dadurch gekennzeichnet,

(a) daß die oder jede geschlossene Strömungsschleife einen mit dem Eintritt verbundenen Gasbrenner (34) und einen mit dem Austritt verbundenen Luftimpeller (36) zum Saugen des verbrannten Gases durch die Schleife aufweist;

(b) daß die Strömmungsschleife oder die Strömmungsschleifen zur Erhitzung des Autoklaven auf eine Arbeitstemperatur bis etwa 400°C vorgesehen sind;

(c) daß Temperatursensoreinrichtungen (42) vorgesehen sind, die durch die Wand des Tanks (10) hindurchragen und die auf die Temperatur des Gases im Tank ansprechen; und

(d) daß eine Kontrolleinheit (44), die auf den Zustand der Temperatursensoreinrichtungen (42) anspricht, wirksam mit dem oder den Gasbrennern (34) verbunden ist, um den oder jeden Gasbrenner zur Aufrechterhaltung der Temperatur des Gases im Autoklaven innerhalb einer Toleranz von ±1°C des beabsichtigten Wertes ein- oder auszuschalten.

2. Autoklav nach Anspruch 1, dadurch gekennzeichnet, daß der Tank (10) im wesentlichen zylindrisch ausgebildet und mit horizontaler Achse angeordnet ist und daß er an seiner Mundöffnung mit einer Zugangstür (12) verschlossen ist, wobei das Wärmeaustauscherrohr (24) geschlungen ausgebildet ist und den Tank (10) zum Eintritt und zum Austritt durch eine Endwand (28) hindurch durchdringt.

3. Autoklav nach Anspruch 2, dadurch gekennzeichnet, daß wenigstens zwei Wärmeaustauscherschleifen (24a, 24b) an entgegensetzten Seiten des Tanks (10) angeordnet sind, wobei jede Wärmeaustauscherschleife jeweils in zwei Windungen durch den Tank (10) geführt ist und derart angeordnet ist, daß ein horizontaler Durchmesser zwischen den beiden Windungen der entgegensetzten Schleifen frei ist für einen wesentlichen Abstand vom Tankmund, wodurch Gegenstände, die im wesentlichen den vollen Durchmesser des Tanks (10) aufweisen, einführbar sind.

4. Autoklav nach Anspruch 3, dadurch gekennzeichnet, daß eine zusätzliche Wärmeaustauscherschleife im Boden vorgesehen ist.

5. Autoklav nach Anspruch 1 oder einem der folgenden, dadurch gekennzeichnet, daß das Wärmeaustauscherrohr am Eintritt und am Austritt den Tank durch eine geflanschte Hülse (30) durchsetzt und Flansche (32) aufweist, die an den Flanschen des Ein- und Austrittsendes der Hülsen (30) befestigt sind, wobei die Wärmeaustauscherrohre (24) abnehmbar am Autoklaven befestigt sind.

6. Autoklav nach Anspruch 1 oder einem der folgenden, dadurch gekennzeichnet, daß der Tack mit Einrichtungen (16) zur Zuleitung von Gas unter Druck und mit Einrichtungen (14) zur Evakuierung von Gas aus diesem versehen ist.

7. Autoklav nach Anspruch 1 oder einem der folgenden, dadurch gekennzeichnet, daß Zeitverzögerungseinrichtungen vorgesehen sind, die ein Einschalten des oder jedes Gasbrenners (34) verhindern, bis der Zustand der Temperatursensoreinrichtungen (42) eine Temperatur unterhalb der vorbestimmten Temperatur für eine bestimmte Zeit angezeigt hat.

## Revendications

1. Autoclave destiné au traitement thermique de matières plastiques renforcées par des fibres, comprenant un réservoir étanche aux gaz (10), comportant au moins une boucle de débit fermée définie par un tuyau d'échange de chaleur (24) exposé à l'intérieur du réservoir (10) et comprenant une entrée et une sortie accessibles de l'extérieur du réservoir (10), ainsi qu'un ventilateur (40) placé à l'extérieur du réservoir (10) pour faire circuler les gaz à l'intérieur du four de manière à échanger la chaleur avec le tuyau d'échange de chaleur (24), autoclave caractérisé en ce que:

a) la boucle ou chaque boucle fermée comporte um brûleur à par (34) relié à l'entrée et un aspirateur d'air (36) relié à la sortie de manière à aspirer les gaz brûlés à travers la boucle;

b) la boucle ou les boucles de débit servent à chauffer l'autoclave à une température de travail atteignant 400°C;

c) des moyens de détection de température (42) traversant la paroi du réservoir (10) sont sensibles à la température des gaz à l'intérieur de celui-ci;

d) un bloc de commande (44) répondant à l'état des moyens de détection de température (42) est relié en fonctionnement au brûleur ou à chacun des brûleurs à gaz (34) pour allumer ou éteindre le brûleur ou chaque brûleur de manière à maintenir la température de l'autoclave à gaz dans une plage de ±1°C autour de la valeur voulue.

2. Autoclave selon la revendication 1, caractérisé en ce que le réservoir (10) est généralement cylindrique, se monte de façon que son axe soit horizontal et se ferme à son embouchure par une porte ou un panneau d'accès (12), le tuyau d'échange de chaleur (24) suit un chemin sinueux, entre et sort du réservoir (10) en traversant la paroi d'extrémité (28) de celui-ci.

3. Autoclave selon la revendication 2, caractérisé en ce qu'il comporte au moins deux boucles d'échange de chaleur (24a, 24b) montées sur les côtés opposés du réservoir (10), chaque boucle d'échange de chaleur effectuant deux passages le long du réservoir (10) et retour, ces boucles étant disposées de façon qu'un diamètre horizontal compris entre les deux passages des boucles opposées ne soit pas obstrué sur une distance importante par rapport à l'embouchure du réservoir, ce qui permet ainsi d'introduire des articles présentant pratiquement tout le diamètre du réservoir (10).

4. Autoclave selon la revendication 3, caractérisé en ce qu'une boucle d'échange de chaleur supplémentaire est formée dans le plancher.

5. Autoclave selon l'une quelconque des revendications précédentes, caractérisé en ce que le tuyau d'échange de chaleur pénètre dans le réservoir et sort de celui-ci en passant à travers un manchon à collerette (30), ce tuyau comportant des collerettes (32) qui se fixent aux collerettes des manchons d'extrémités d'entrée et de sortie (30), ce qui permet ainsi de fixer les tuyaux d'échange de chaleur (24) de manière amovible dans l'autoclave.

6. Autoclave selon l'une quelconque des revendications précédentes, caractérisé en ce que le réservoir est muni de moyens (16) d'admission de gaz sous pression dans celui-ci, et de moyens (14) d'évacuation des gaz de celui-ci.

7. Autoclave selon l'une quelconque des revendications précédentes, caractérisé en ce qu'il comporte des moyens de retard de temps suivant à empêcher que le brûleur ou chaque brûleur à gaz (34) soit allumé avant que l'état des moyens de détection de température (42) ait indiqué une température inférieure à la température nominale pendant une durée prédéterminée.

FIG.1

EP 0 176 508 B1

FIG. 2